Europäisches Patentamt

**European Patent Office**

Office européen des brevets

(11) Publication number: **0 219 944**
A2

(12) # EUROPEAN PATENT APPLICATION

(21) Application number: **86306521.5**

(22) Date of filing: **22.08.86**

(51) Int. Cl.⁴: **B 41 J 5/10**

(30) Priority: **29.08.85 GB 8521442**
**10.07.86 GB 8616784**

(43) Date of publication of application:
**29.04.87 Bulletin 87/18**

(84) Designated Contracting States:
**BE DE FR IT NL SE**

(71) Applicant: **PCD MALTRON LIMITED**
**15 Orchard Lane**
**East Molesey Surrey, KT8 0BN(GB)**

(72) Inventor: **Hobday, Stephen William**
**15 Orchard Lane**
**East Molesey Surrey, KT8 0bn(GB)**

(54) **Keyboard.**

(57) A keyboard for a typewriter, computer or other information input device includes separate banks of keys (2, 3) for operation by the fingers of the right and left hands, banks of keys (4, 5) for operation by the thumbs, and a further bank of keys (6) between the banks (2, 3). The home keys (12, 13, 14) for operation by the middle, ring and little fingers lie at the same level but have their faces inclined towards the outside of the row of keys. Keys (11, 15) for operation by the forefinger lie at a higher level and have their faces inclined towards the outside of the row at a greater angle. Key (16) for operation by the extended little finger has its face horizontal. The key faces of the rows (31 – 37) lie on a surface which is concave in a direction transverse to the rows. The bank (6) is rotatable bodily about a substantially vertical axis. A changeover key or switch provides for selection of new or old letter layouts. Keys that change are dually designated.

Fig. 2

KEYBOARD

This invention relates to keyboards for typewriters, computers and other information input devices in which keys are depressed or touched by an operator's fingers to cause the recording of letters, numerals and other symbols and / or to effect functional operation of the input devices. In particular it relates to certain improvements, developments and refinements of the known MALTRON ( Registered Trade Mark ) keyboard of the type described in United States Patent Specification No. 4244659 and United Kingdom Patent Specification No. 2000083 B.

One of the features of the MALTRON keyboard is a bank of keys having their faces disposed over a surface which is concave in two orthogonal directions, i.e., along the rows of keys and transverse to the rows. The keyboard is thus shaped to correspond generally to the disposition and length of the operator's fingers.

In one aspect this invention provides a further refinement of the disposition of the keys to correspond yet more closely to the natural disposition of the operator's hands and fingers. Thus according to the invention in this aspect a keyboard comprises a row of keys in which the keys for operation by the middle, ring and little fingers lie substantially at the same level but have their faces inclined towards the outside end of the row. A preferred angle of inclination is about 12° - 25°.

According to a feature of the invention there is at least one key at the inside end of the row for operation by the fore finger, this key being located at a higher level, and having its face inclined towards the outside end of the row at a greater angle than the three first mentioned keys. A preferred angle of inclination is about 20° - 35°.

According to yet another feature of the invention the row comprises at least one further key at its outside end for operation by the extended little finger and having its face disposed substantially horizontally.

The above defined arrangement may apply not only to the middle row of keys, but also to rows above and below the middle row. The faces of the keys may lie on a surface which is concave in a direction transverse to the rows.

The arrangement of keys described above makes it possible for the operator's fingers readily to reach outside the range possible with a conventional keyboard. According to a further feature of the invention therefore the keyboard comprises numeral, upper, middle and lower rows of keys, and one or more further rows each including at least one key located below the lower row.

Another feature of the MALTRON keyboard is the use, in place of the conventional "qwerty" layout of letter keys, of an arrangement of letters optimised to ease the operator's task; this involves inter alia the location of the keys for the more frequently used letters in the middle row. The logical development of this concept leads to the location of the shift key at the outside end of the middle row for operation by the little finger.

It is found however that "qwerty" trained operators are so accustomed to finding the shift key at a "lower" level than the middle row, that they do not welcome having a shift key in the "logical" position. According to another aspect of the invention therefore there is provided a keyboard having a shift key at the outside end, and at a level intermediate the levels, of the middle and lower rows.

The above mentioned Patent Specifications show a MALTRON keyboard having two separate banks of keys for operation by the fingers of the right and left hands respectively, these banks including keys for both letters and numerals. According to the invention in another aspect there is provided an additional bank of keys for numerals between the two first-mentioned banks, this additional bank may be fixed or rotatable bodily about a substantially vertical axis. This bank is intended for one-handed operation and, when rotatable, can be separately angled to suit either right-handed or left-handed operators. The faces of the keys of the additional bank may be disposed on a surface which is concave in two orthogonal directions.

According to a further aspect of the invention at least some of the keys may be dually designated to afford alternative layouts of letters and / or symbols, means being provided to select the preferred layout. The alternative layouts may have letters and / or symbols of different sizes and / or colours.

The various features of the invention will now be described by way of example with reference to the accompanying drawings of which:

Fig. 1 is a perspective view of a keyboard in accordance with the invention, intended for use with a computer, a word processor, an electronic typewriter, or any similar keyboard operated machine.

Fig. 2 is a sectional view on the line II – II in Fig. 1 and Fig. 3, along the line of the middle row of keys.

Fig. 3 is a sectional view on the line III – III in Fig. 1, transverse to the line of keys.

Fig. 4 is a sectional view on the line IV – IV in Fig. 1.

Figs. 5 – 8 are diagrams showing the allocation of letters, numerals, symbols and functions to the keys.

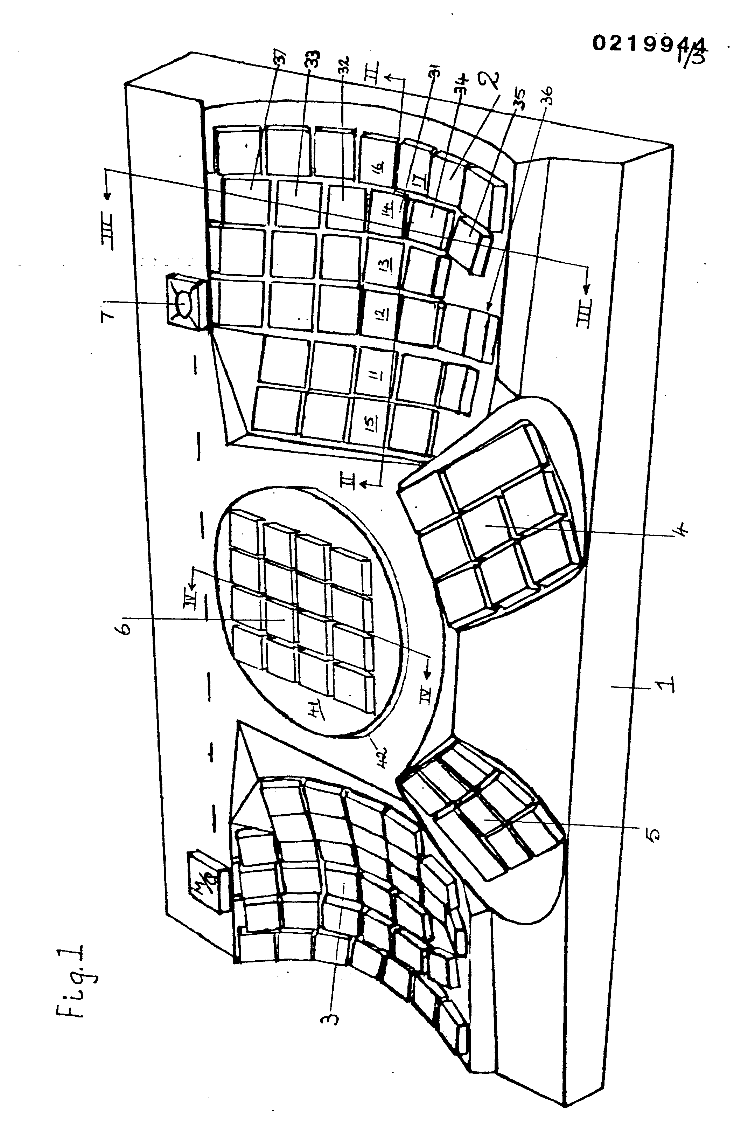

Referring firstly to Fig. 1 the keyboard comprises a deck 1 carrying separated banks of keys 2, 3 arranged for operation by the fingers of the right and left hands respectively and further banks of keys 4, 5 arranged for operation by the right and left thumbs. Yet another bank of keys 6 is located between the banks 2, 3 while there is a row (or rows) of keys 7 along the top of the deck.

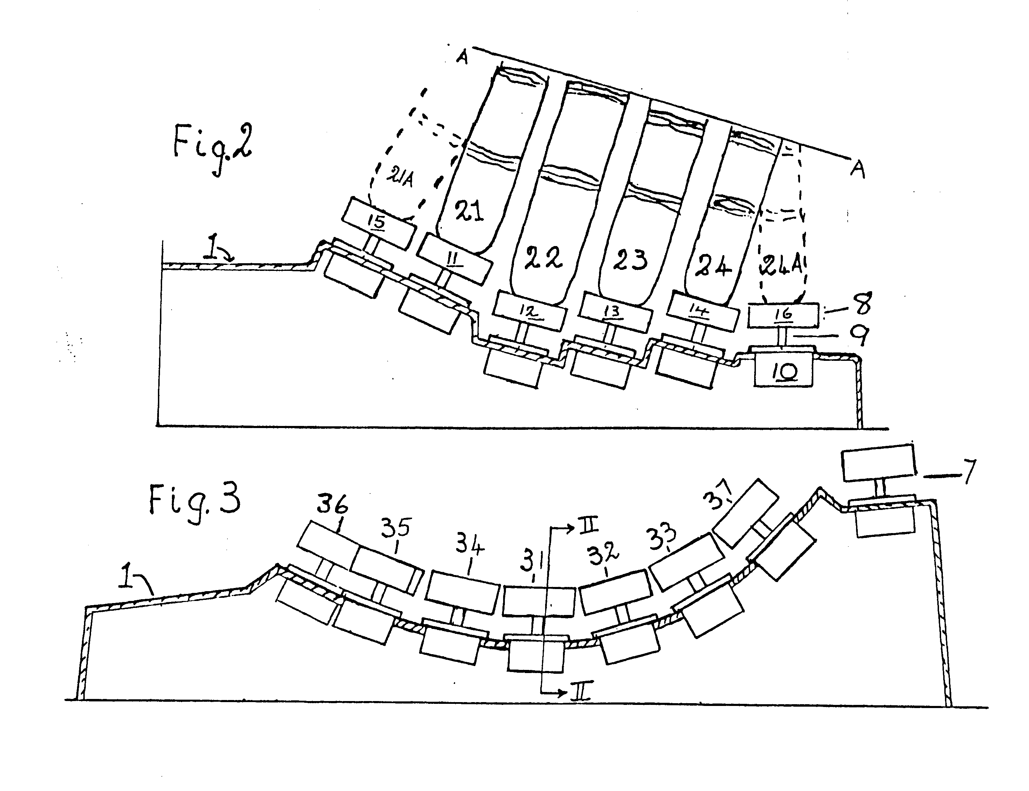

As shown in Figs 2 & 3 each key 8 is mounted on a plunger 9 which operates a switch 10 set into the deck 1, the switches being connected by suitable leads ( not shown )to provide input to the computer or other machine.

Fig. 2 shows the arrangement of the keys in the middle or home row of the right hand bank 2. It includes home keys 11, 12, 13, 14 arranged for operation respectively by the fore, middle, ring and little fingers of the right hand, together with an additional key 15 at the inside end of the row for operation by the extended fore finger and an additional key 16 at the outside end for operation by the extended little finger.

The three keys 12, 13, 14 lie at substantially the same level, i.e., on a horizontal line as seen by the operator, but are tilted so that their contact faces are inclined outwardly, i.e., towards the outside end of the row and the outside of the operator's hand at an angle of about 12° - 25° to the horizontal. The forefinger keys 11, 15 at the inside end of the row similarly have their faces inclined outwardly but at a greater angle, say, about 20° - 35°, while they are located at a higher level than the keys 12, 13, 14. The outside key 16 is on the other hand disposed at substantially the same level as the keys 12, 13, 14 with its face substantially horizontal.

The above described disposition of the keys stems from the realisation that in its natural and relaxed position the operator's hand lies with the back inclined outwardly ( approximately in line with the line A - A in Fig. 2 )and the middle, ring and little fingers inclined to the vertical as shown at 22, 23, 24 in Fig. 2.

The faces of the keys 12, 13, 14 are correspondingly inclined to the horizontal so that the fingers strike them substantially normally, while as these keys lie at substantially the same level they conform to the different lengths of these three fingers.

The raised position and greater inclination of the inside keys 11, 15 similarly conform to the inclination and lesser length of the forefinger as shown at 21, 21A. On the other hand when the little finger is extended outwardly (as shown at 24A) to operate the outside key 16 it takes up a substantially vertical alignment and so it is appropriate for the face of this key to be substantially horizontal. It may be appropriate for the face of key 15 to be inclined outwardly at a slightly greater angle than the face of key 11. There might be yet another key at the end of the row outside key 16 and this might have its face inclined inwardly.

The corresponding keys of the upper, numeral and lower rows 32, 33, 34 of the keyboard are located and have their faces inclined in the same way as those of the middle row 31.

Also as shown in Fig. 3 the keys of the upper and numeral rows 32, 33, together with those of a partial row 37 above the numeral row, have their faces inclined forwardly towards the operator at progressively increasing angles, while the faces of the keys of the middle row 31 lie substantially horizontally. In addition the lower row 34 and the two further partial rows 35, 36 below the lower row have their faces inclined away from the operator. The faces of the keys accordingly lie on a surface which is concave in a direction transverse to the rows. This makes it possible for the operator's fingers to reach the keys of rows 35, 36, outside the range possible with a conventional keyboard.

It is to be noted that the words " upper " and " lower " are used in a conventional sense to denote respectively rows further from and nearer to the operator. It will also be understood that the faces of many of the keys are inclined from the horizontal in two directions; for example keys in the upper row 32 above keys 11 - 15 in the middle row 31 are inclined outwardly and forwardly. On the other hand the key above key 16 is inclined forwardly only and is horizontal with respect to the row of keys.

The bank of keys 3 for the left hand is of course a mirror image of the bank 2 for the right hand.

The keys of the banks 4, 5 for the thumbs have their faces disposed over surfaces which are concave in two orthogonal directions, as in the earlier Patent Specifications.

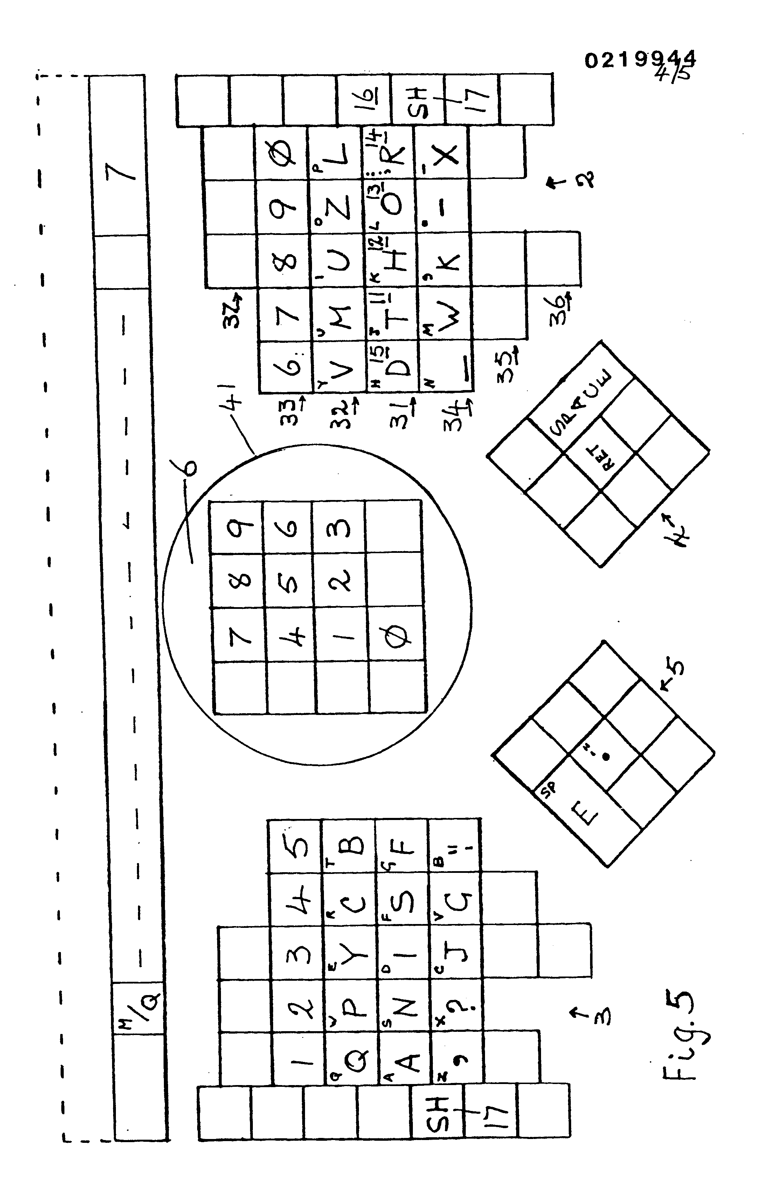

Fig. 5 shows the allocation of letters and numerals to the keys, the respective banks, rows and keys being identified by the same references as in Figs. 1, 2 & 3. The allocation of letters is as disclosed in the earlier Patent Specifications, while the banks 4, 5 similarly include keys for SPACE & letter E respectively. Keys shown as blank may be allocated to symbols as required while some - in particular those in the top row ( or rows ) 7 may provide functional inputs to the computer. However as previously disclosed the keys could be allocated in accordance with the conventional "qwerty" or any other layout.

Furthermore to assist "qwerty" trained operators to adapt themselves to the physical shape of the MALTRON keyboard, the letters and some of the symbol keys may be dually designated in accordance with the MALTRON and "qwerty" letter layouts as shown in Fig. 5.

To distinguish the two layouts more easily the letters and symbols of the sets may be of different sizes (as shown) and / or of different colours. A special key M/Q or switch in row 7 is provided to select the preferred arrangement of letters and symbols.

The key faces may be provided with Liquid Crystal Displays of the alternative sets of letters and symbols, the selection key or switch also being effective to produce the display appropriate for the selected set.

Shift keys are provided to select upper or lower case letters or alternative numerals and symbols in known manner ( For convenience only the numerals in the upper row are shown in Fig. 5 ).

A shift key 17 is located at the outside end of each of the middle rows 31 in banks 2, 3, but, as shown, they are out of alignment therewith, being displaced downwardly to a position intermediate the middle and lower rows 31, 34. The other outside keys, for example, key 16 are displaced correspondingly. As explained above this intermediate position is favoured by operators who have been previously trained.

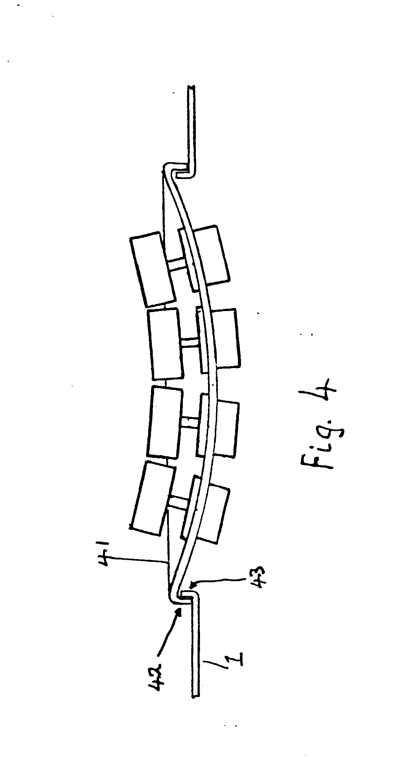

The keyboard described is intended for operation by both hands and the numerals are accordingly divided between banks 2, 3 in conventional manner. However key bank 6 provides a facility for entering numerals with one hand only while the other is, for example, being used to turn over papers. The keys of this bank may be directly mounted on deck 1 or as shown, be mounted on a platform 41 which may have a flange 42 fitting snugly around a ring 43 formed on the top of the deck 1 to turn about a substantially vertical axis. The bank can accordingly be angled to suit either a right handed or a left handed operator. The keys of this bank may be arranged conventionally to give a flat surface, or, as shown in Fig. 4, may have their faces disposed over a surface which is concave in two orthogonal directions.

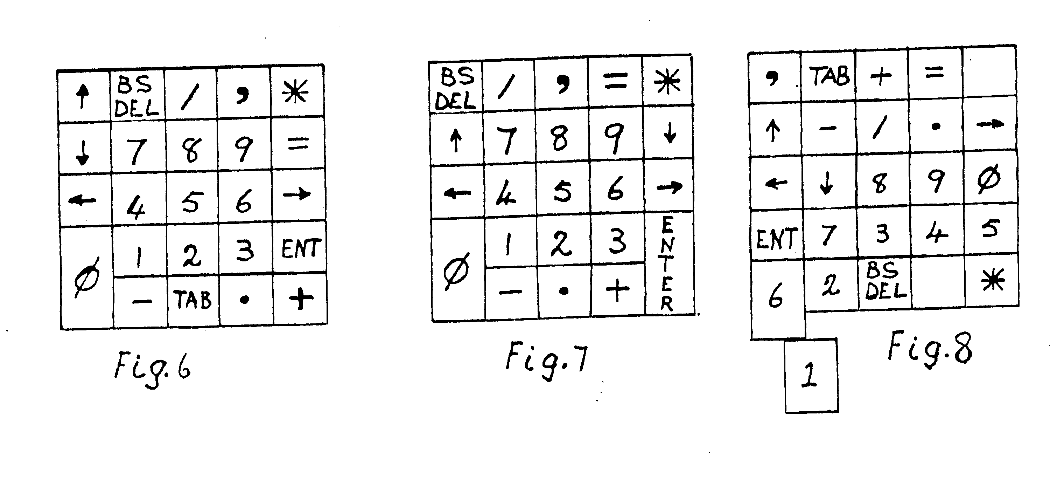

Alternative arrangements of the keys of bank 6 are shown by way of example in Figs. 6, 7, & 8 in which there are keys for symbols and functions as well as for numerals. A particular feature shown in Fig. 8 is the provision of keys for the numbers 1 & 6 which are intended for use by the thumb. Thus the sequential action of the thumb & fingers in following the numbers 1,2,3,4,5, & 6,7,8,9,0 are closer to normal hand use than the arrangement of Figs. 6 & 7 and give a more uniform work load for the digits. A higher accuracy should also be obtainable.

In a further embodiment provision is made for the bank of keys 6 to be removeable so that alternative key sets can be fitted, for example, a left hand version of Fig. 8. Other uses for this feature in providing direct access to a computer via its keyboard can be envisaged, eg. a tracker ball to move the display cursor, or a Liquid Crystal Display to show the keyboard output. It would also be possible, because the size of the keyboard is determined by human ergonomic factors, for a complete personal computer to be contained in the keyboard.

In the embodiment described the deck 1 is shaped at each part of its surfaces to conform to the required inclination of the key faces. It would be possible however to have the switches mounted in a flat deck with the keys mounted on the plungers at the required angles. The deck could be angled to a mean position to give the smallest amount of error in the direction of switch actuation movement.

The keys could alternatively be constituted by touch pads, or be made integrally as part of a shaped, partially or fully enveloping, flexible moulding or membrane. The keys could have a capacitative sensing action rather than the mechanical contact type as illustrated in Fig. 1.

CLAIMS

1. A keyboard comprising a row (31) of keys in which the keys (12, 13, 14) for operation by the middle, ring and little fingers lie substantially at the same level characterised in that said keys have their faces inclined towards the outside end of the row.

2. A keyboard according to claim 1 chacterised in that the faces of the keys (12, 13, 14) are inclined at an angle of about 12 - 25°.

3. A keyboard according to claim 1 or claim 2 chacterised by at least one further key (11) at the inside end of the row (31) for operation by the forefinger, this key being located at a higher level and having its face inclined towards the outside end of the row at a greater angle than the first-mentioned keys.

4. A keyboard according to claim 3 chacterised in that the face of the further key is inclined at an angle of about 20 - 35°.

5. A keyboard according to any one of the preceding claims chacterised by at least one further key (16) at the outside end of the row (31) for operation by the extended little finger and having its face substantially horizontal.

6. A keyboard chacterised by a plurality of rows (31 - 34) of keys, each in accordance with any one of the preceding claims.

7. A keyboard according to claim 6 chacterised in that the faces of the keys lie on a surface which is concave in a direction transverse to the rows.12.

8. A keyboard according to claim 7 chacterised by numeral, upper, middle and lower rows of keys, and at least one further row (35) including at least one key located below the lower row.

9. A keyboard comprising a middle row (31) and a lower row (34) of keys, chacterised by a shift key (17) at the outside end, and located at a level intermediate the levels, of the rows.

10. A keyboard comprising two separate banks (2, 3) of keys for operation by the fingers of the right and left hands respectively, chacterised in that each bank includes keys for both letters and numerals, and further comprising an additional bank (6) of keys for numerals located between the first-mentioned banks.

11. A keyboard according to claim 10 chacterised in that the additional bank (6) is rotatable bodily about a substantially vertical axis.

12. A keyboard according to claim 10 or claim 11 chacterised in that the faces of the keys of the additional bank (6) are disposed on a surface which is concave in two orthogonal directions.

13. A keyboard according to any one of the preceeding claims chacterised in that at least some of the keys are dually designated to afford alternative layouts of letters and / or symbols and comprising means to select the preferred layout.

14. A keyboard according to claim 13 chacterised in that the alternative layouts have letters and / or symbols of different sizes and / or colours.

Fig.1

021994/3

Fig.2

A

21A

15

21

11

22    23    24    24A

8

12    13    14    16

9

10

Fig.3

7

36
35
34      II    32    33    37
31

1

II

2/5

0219944

Fig. 4

Fig.5

0219944

**Fig. 6**

| ↑ | BS DEL | / | , | ✳ |
|---|---|---|---|---|
| ↓ | 7 | 8 | 9 | = |
| ← | 4 | 5 | 6 | → |
| Ø | 1 | 2 | 3 | ENT |
| | − | TAB | • | + |

**Fig. 7**

| BS DEL | / | , | = | ✳ |
|---|---|---|---|---|
| ↑ | 7 | 8 | 9 | ↓ |
| ← | 4 | 5 | 6 | → |
| Ø | 1 | 2 | 3 | ENTER |
| | − | • | + | |

**Fig. 8**

| , | TAB | + | = | |
|---|---|---|---|---|
| ↑ | − | / | • | → |
| ← | ↓ | 8 | 9 | Ø |
| ENT | 7 | 3 | 4 | 5 |
| 6 | 2 | BS DEL | | ✳ |

1